# EUROPEAN PATENT APPLICATION

(11) **EP 2 706 735 A1**
(43) Date of publication of application: **12.03.2014**
(21) Application number: 13764177.5
(22) Date of filing: 21.03.2013
(51) Int. Cl.: H04L 29/08

(54) **METHOD AND SYSTEM FOR ACQUIRING USER CONTENT**

(30) Priority: 21.03.2012 CN 201210075596
(71) Applicant: Tencent Technology (Shenzhen) Company Limited, Shenzhen, Guangdong 518044 (CN)
(72) Inventor: LIAN, Han, Shenzhen Guangdong 518044 (CN); ZHOU, Tao, Shenzhen Guangdong 518044 (CN); DONG, Xijun, Shenzhen Guangdong 518044 (CN); MENG, Jinfeng, Shenzhen Guangdong 518044 (CN); ZHENG, Chunlei, Shenzhen Guangdong 518044 (CN); LIU, Yu, Shenzhen Guangdong 518044 (CN); YU, Jun, Shenzhen Guangdong 518044 (CN); ZHONG, Rui, Shenzhen Guangdong 518044 (CN); WANG, Boqiang, Shenzhen Guangdong 518044 (CN); WANG, Wei, Shenzhen Guangdong 518044 (CN); TAO, Yucao, Shenzhen Guangdong 518044 (CN)
(74) Representative: Gunzelmann, Rainer
(86) International application number: PCT/CN2013/072992
(87) International publication number: WO 2013/139287

(57) **Abstract**

A method and a system for acquiring user contents are disclosed, which relates to the field of network communications. The method includes: a first terminal transmits a content acquisition request to a server, wherein the content acquisition request comprises at least one of geographic information and a user identification; the server searches a content information repository stored in the server for content information matching the content acquisition request and pushing the searched content information to the first terminal, wherein the content information repository is issued by a second terminal and stored in the server, and each piece of the content information comprises at least location information and a user identification of the second terminal. The system comprises: a first terminal and a server. The method and system as disclosed may be capable of providing a user with valuable user contents from a large amount of user contents in the network.

## Description

### TECHNICAL FIELD

The present disclosure relates to the filed of network communications, and in particular to a method and a system for acquiring user content.

### BACKGROUND

With the development of user information sharing and broadcasting platforms, such as blog and microblog, user contents on the internet have grown explosively, which can be presented to users through various terminals.

For example, a user may run a microblog application on a terminal, such as a mobile phone or a personal computer, and then the user may create user contents and publish the created user contents on the internet; when it is necessary for a user to acquire user contents from the internet, a terminal may acquire the user contents from the network and present the acquired user contents to the user.

Nowadays, the user contents are growing explosively on the internet, it is a pressing problem how to acquire relatively valuable user contents from a large amount of user contents on the internet, and present the acquired relatively valuable user contents to a user.

### SUMMARY

In order to acquire valuable user contents from a large amount of user contents on the internet, the present disclosure provides a method and a system for acquiring user contents. The technical solutions are provided as follows:
A method for acquiring user contents, comprising:
   transmitting, by a first terminal, a content acquisition request to a server, wherein the content acquisition request comprises at least one of geographic information and a user identification; and
   searching, by the server, a content information repository stored in the server for content information matching the content acquisition request and pushing the searched content information to the first terminal, wherein the content information repository is issued by a second terminal and stored in the server, and each piece of the content information comprises at least location information and a user identification of the second terminal.
A system for acquiring user contents, comprising a first terminal and a server;
   the first terminal is configured to send a content acquisition request to the server, the content acquisition request comprises at least one of geographic information and a user identification; and
   the server is configured to search a content information repository stored in the server for a content information matching the content acquisition request and pushing the searched content information to the first terminal, wherein the content information repository is issued by a second terminal and stored in the server, and each piece of the content information at least comprises location information and a user identification of the second terminal.

In an embodiment of the present disclosure, a first terminal sends a content acquisition request to a server, wherein the content acquisition request comprises at least one of geographic information and user identification; the server searches a content information repository stored therein for content information matching the content acquisition request and pushes it to the first terminal, wherein the content information repository is issued by a second terminal and stored in the server, and each piece of the content information comprises at least location information and a user identification of the second terminal. In this way, it is possible to acquire relatively valuable content information for the user according to the user identification and/or the geographic information.

### BRIEF DESCRIPTION OF THE DRAWINGS

Fig. 1 is a flow chart of a method for acquiring user contents according to the first embodiment of the present disclosure;
Fig. 2 is a flow chart of a method for acquiring user contents according to the second embodiment of the present disclosure;
Fig. 3 is a structure of a system for acquiring user contents according to the second embodiment of the present disclosure.

### DETAILED DESCRIPTION

To facilitate the understanding of the present disclosure and advantages thereof, further detailed description of the embodiments according to the present disclosure will be provided below with reference to the accompany drawings.

### Embodiment 1

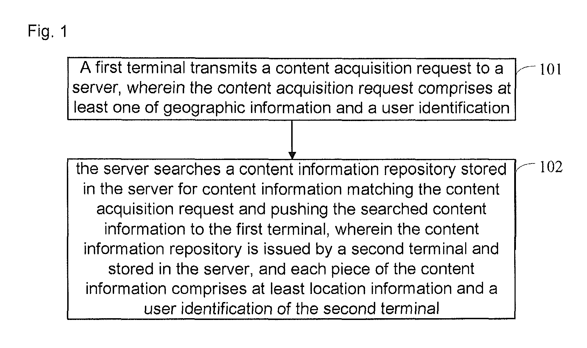

As shown in Fig. 1, the present disclosure provides a method for acquiring user contents, comprising:
Step 101: a first terminal transmits a content acquisition request to a server, wherein the content acquisition request comprises at least one of geographic information and a user identification.
Step 102: the server searches a content information repository stored in the server for content information matching the content acquisition request and pushes the searched content information to the first terminal, wherein the content information repository is issued by a second terminal and stored in the server, and each piece of the content information comprises at least location information and a user identification of the second terminal.

In an embodiment of the present disclosure, a first terminal transmits a content acquisition request to a server, the content acquisition request comprises at least one of geographic information and a user identification; the server searches a content information repository stored in the server for a content information matching the content acquisition request and pushes the searched content information to the first terminal, wherein the content information repository is issued by a second terminal and stored in the server, and each piece of the content information comprises at least location information and a user identification of the second terminal. In this way, it is possible to acquire relatively valuable content information according to the user identification and/or the geographic information.

### Embodiment 2

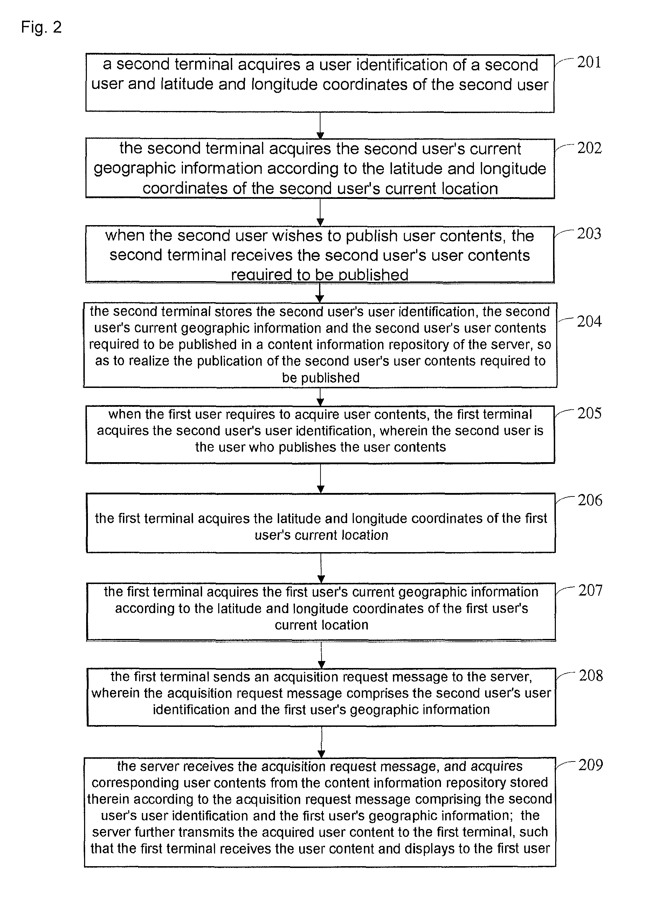

As shown in Fig. 2, the present disclosure provides a method for publishing user contents, comprising:
Step 201: a second terminal acquires a user identification of a second user and latitude and longitude coordinates of the second user.

In particular, the second terminal may acquire the second user's user identification stored in advance in the second terminal, or receive the second user's user identification directly inputted by the second user; the second terminal locates the second user's current location so as to acquire the latitude and longitude coordinates of the second user's current location.

When the second terminal is turned on, it is necessary for the second terminal to acquire the second user's user identification and the latitude and longitude coordinates of the second user's current location; when the second user turns on the second terminal for the first time, the second user needs to input the second user's user identification in the second terminal, and the second terminal receives and stores the second user's user identification. Thereafter, in the further, each time the second user turns on the second terminal, the second terminal can directly acquire the second user's user identification stored therein. Alternatively, each time the second user turns on the second terminal, the second user may directly input the second user's own user identification in the second terminal, thus the second user's user identification inputted by the second user may be received directly by the second terminal.

The second terminal may comprise a GPS (Global Positioning System) module, which may locate the second user's current location by the GPS module, so as to acquire the latitude and longitude coordinates of the second user's current location. Alternatively, the second terminal may locate the second user's current location by using a network positioning method, so as to acquire the latitude and longitude coordinates of the second user's current location.

For example, the second user's user identification is stored as User ID1 in the second terminal in advance. Therefore, when the second user turns on the second terminal, the second terminal may acquire the stored second user's user identification User ID1 directly, and locate the second user's current location by the included GPS module to acquire the latitude and longitude coordinates (x1, y1) of the second user's current location.

Step 202: the second terminal acquires the second user's current geographic information according to the latitude and longitude coordinates of the second user's current location.

In particular, the second terminal determines a point-centered predetermined area, wherein the point corresponds to the latitude and longitude coordinates of the second user's current location, acquires one or more pieces of geographic information included in the predetermined area from the internet, and constructs an information list. The information list comprises the acquired geographic information, and the information list is displayed to the second user, such that the second user may select the second user's current geographic information from the information list.

The step that the second terminal determines a point-centered predetermined area comprises: acquiring a point-centered circular area having a radius of a predetermined length by taking the point as the center of the circle, wherein the point corresponds to the latitude and longitude coordinates of the second user's current location.

The geographic locations included in the area can be places such as markets, shops, streets or the like, and the geographic information included in the area can be names of the markets, names of the shops and/or street numbers or the like.

For example, a terminal acquires an circular area Area1 by taking a point as the center of the circle, wherein the point corresponds to the latitude and longitude coordinates (x1, y2) of the second user's current location, and all the geographic locations included in the Area1 are three markets named Market1, Market2 and Market3, respectively, two shops named Shop1 and Shop2, respectively, and a park named Park. The terminal acquires the geographic information included in the area from the internet, i.e. Market1, Market2, Market3, Shop1, Shop2 and Park, respectively, and constructs an information list as illustrated in Table 1 and displays the information list to the second user. If the second user's current geographic location is in a market named Market3, then the second user selects Market3 from the information list illustrated in Table 1 displayed on the second terminal as the current geographic information, and submit the market named Market3 to the second terminal, and then the second terminal acquires the market named Market3 as the geographic information selected by the second user.

**Table 1**

| Geographic information |
|---|
| Market1 |
| Market2 |
| Market3 |
| Shop1 |
| Shop2 |
| Park |

At present, there are websites providing location services on the internet, such as Baidu Map and Google Map, thus the terminal may search out all the geographic information within the determined area from the websites providing location services.

Step 203: when the second user wishes to publish user contents, the second terminal receives the second user's user contents required to be published.

The second terminal may display an input interface to the second user. The second user may input the user contents required to be published into this input interface, and then submit the user contents required to be published to the second terminal, the second terminal receives the second user's user contents required to be published submitted by the second user.

For example, if the second user wishes to publish user contents, the second terminal displays an input interface to the second user; the second user inputs the user contents required to be published ContextA into the displayed input interface on the second terminal, and then submits the user contents required to be published ContextA to the second terminal, the second terminal receives the second user's user contents required to be published ContextA.

Step 204: the second terminal stores the second user's user identification, the second user's current geographic information and the second user's user contents required to be published in a content information repository of the server, so as to realize the publication of the second user's user contents required to be published.

The content information repository of the server comprises corresponding relations among the user identification, the geographic information and the user contents.

In particular, the terminal transmits a publish request message to the server, wherein the publish request message comprises the second user's user identification, the second user's geographic information and the second user's user contents to be published. The server receives the publish request message, and stores the corresponding relations among the second user's user identification, the second user's geographic information and the second user's user content required to be published included in the publish request message in the content information repository, so as to realize the publication of the second user's user contents required to be published.

In an embodiment of the present disclosure, the second terminal may transmit a publish request message to the server, wherein the publish request message comprises the latitude and longitude coordinates of the second user's current location, the second user's user identification and the second user's user contents required to be published. According to the latitude and longitude coordinates of the second user's current location, the server acquires the second user's geographic information, and stores the corresponding relations among the second user's user identification, the second user's geographic information and the second user's user contents required to be published in the content information repository, so as to realize the publication of the second user's user contents required to be published.

For example, the second terminal transmits a publish request message to the server, wherein the publish request message comprises the second user's user identification User ID1, the second user's geographic information Market3 and the second user's user contents to be published ContextA. The server receives the publish request message, and stores the publish request message comprising the second user's user identification User ID1, the second user's geographic information Market3 and the second user's user contents to be published ContextA in the content information repository illustrated in Table 2, so as to realize the publication of the second user's user contents required to be published ContextA.

**Table 2**

| User identification | Geographic information | User content |
|---|---|---|
| User ID1 | Market3 | ContextA |
| User ID2 | Market3 | ContextB |
| User ID1 | Park | ContextC |
| ··· | ··· | ··· |

In the embodiment, the second terminal acquires the second user's user identification and the second user's current geographic information, and when the second user wishes to publish user contents, the second terminal receives the second user's user contents required to be published submitted by the second user. The second terminal stores the second user's user identification, the second user's current geographic information and the second user's user contents required to be published in the content information repository of the server, so as to realize the publication of the second user's user contents required to be published. Therefore, when another user, herein a first user, intends to acquire user contents, the first user can acquire relatively valuable user contents according to the user identification and/or the user's geographic information.

In the embodiment of the present disclosure, the second user may directly input the second user's current geographic information in the second terminal.

Step 205: when the first user requires to acquire user contents, the first terminal acquires the second user's user identification, wherein the second user is the user who publishes the user contents.

The first user stores user identifications of one or more second users in a user list of the first terminal in advance. In particular, the first terminal acquires the second user's user identification stored in the user list, or the first terminal acquires user identifications of one or more second users selected by the first user from the user list contained therein.

The first terminal may display the user list contained therein to the first user, the first user may select identifications of one or more second users from the user list displayed on the first terminal, and submit the selected identifications of one or more second users to the first terminal. The first terminal receives the identifications of the one or more second users selected by the first user, so as to acquire the identifications of the one or more second users selected from the user list contained in the first terminal by the first user.

The first user stores the user list in the first terminal in advance, and one example of the user list is illustrated in Table 3 below. When the first user turns on the first terminal and wishes to acquire user contents, the first terminal may acquire identifications of the second users from the user list illustrated in Table 3, wherein the acquired user identifications of the second users are User ID1 and User ID2.

**Table 3**

| User identifications |
|---|
| User ID1 |
| User ID2 |

Step 206: the first terminal acquires the latitude and longitude coordinates of the first user's current location.

In particular, the first terminal locates the first user's current location to acquire the latitude and longitude coordinates of the first user's current location.

The first terminal may comprises a GPS module, and may accordingly locate the first user's current location by the GPS module included therein, so as to acquire the latitude and longitude coordinates of the first user's current location. Alternatively, the first terminal locates the first user's current location with network positioning method, so as to acquire the latitude and longitude coordinates of the first user's current location.

For example, the first terminal locates the first user's current location by the GPS module included therein, so as to acquire the latitude and longitude coordinates (x2, y2) of the first user's current location.

Step 207: the first terminal acquires the first user's current geographic information according to the latitude and longitude coordinates of the first user's current location.

In particular, the first terminal determines a point-centered predetermined area, wherein the point corresponds to the latitude and longitude coordinates of the first user's current location, acquires one or more geographic information included in the predetermined area from the internet, and constructs an information list comprising the acquired geographic information. The first terminal displays the information list to the first user, and acquires the first user's current geographic information selected from the information list by the first user.

The step that the first terminal determines a point-centered predetermined area comprises : acquiring a point-centered circular area having a radius of a predetermined length by taking a point as the center of the circle, wherein the point corresponds to the latitude and longitude coordinates of the first user's current location.

The geographic locations included in the area can be places such as markets, shops, streets or the like, and the geographic information included in the area can be names of the markets, names of the shops and/or street numbers or the like.

For example, the first terminal acquires a circular area Area2 by taking a point as the center of the circle, wherein the point corresponds to the first user's current latitude and longitude coordinates (x2, y2), and all of the geographic locations included in Area2 are four markets named Market1, Market2, Market3 and Market4, and a street numbered Number1, respectively. The first terminal acquires geographic information included in the area from the internet, which are Market1, Market2, Market3, Market3 and Number1, respectively, constructs an information list as illustrated in Table 4, and displays the information list to the first user. If the first user's current geographic location is in a market named Market3, the first user selects Market3 from the information list illustrated in Table 4 displayed on the first terminal as the current geographic information, and submit the market named Market3 to the first terminal, then the market named Market3 is acquired by the first terminal as the geographic information selected by the first user.

**Table 4**

| Geographic information |
|---|
| Market1 |
| Market2 |
| Market3 |
| Market3 |
| Number1 |

Step 208: the first terminal sends an acquisition request message to the server, wherein the acquisition request message comprises the second user's user identification and the first user's geographic information.

Step 209: the server receives the acquisition request message, and acquires corresponding user contents from the content information repository stored therein according to the acquisition request message comprising the second user's user identification and the first user's geographic information; the server further transmits the acquired user content to the first terminal, such that the first terminal receives the user content and displays to the first user.

For example, the first terminal sends an acquisition request message to the server, wherein the acquisition request message comprises user identifications User ID1 and User ID2 of the second users and the first user's current geographic information Market3. The server receives the acquisition request message, acquires the user contents, which are ContextA and ContextB, respectively, from the content information repository illustrated in Table 2 stored therein according to the acquisition request message comprising user identifications User ID1 and User ID2 of the second users and the first user's current geographic information Market3, and sends the acquired user contents ContextA and ContextB to the first terminal. The first terminal receives the user contents ContextA and ContextB sent from the server, and displays the user contents ContextA and ContextB.

Further, the first terminal sends the acquisition request message to the server, wherein the acquisition request message comprises the second user's user identification. The server receives the acquisition request message, searches the content information repository stored therein for corresponding geographic information and user contents according to the acquisition request message comprising the second user's user identification, and sends the searched geographic information and user content to the terminal. The terminal receives the geographic information and the user contents, and displays the geographic information and the user contents.

Alternatively, the first terminal transmits the acquisition request message to the server, wherein the acquisition request message comprises the first user's geographic information. The server receives the acquisition request message, searches the content information repository stored therein for corresponding user identification and user contents according to the acquisition request message comprising the first user's geographic information, and sends the obtained user identifications and user contents to the first terminal. The first terminal receives the user identifications and the user contents, and displays the user identifications and the user contents.

In the embodiment of the present disclosure, the first user may directly input the first user's current geographic information in the first terminal.

In an embodiment of the present invention, when the first user requires to acquire user contents, the first terminal acquires the second user's user identification, wherein the second user is the user who publishes the user content. The first terminal acquires the first user's current geographic information. The first terminal acquires corresponding user contents according to the second user's user identification and the first user's current geographic information, and displays the acquired user contents. The user content published by the second user in the same geographic location as the first user is relatively valuable to the first user, the first terminal can therefore can acquires the relatively valuable user content to the first user according to the second user's user identification and the first user's geographic information, thus the user's experience is improved.

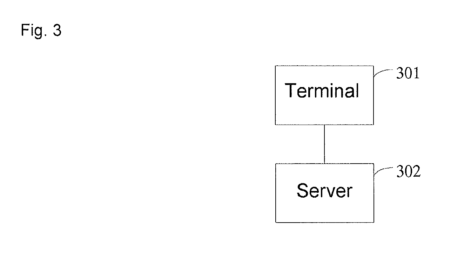

The third embodiment
As shown in Fig. 3, the embodiment of the present invention provides a system for acquiring user contents, which comprises a first terminal 301 and a server 302,
wherein the first terminal 301 is configured to send a content acquisition request to the server 302, the content acquisition request comprises at least one of a geographic information and a user identification; and
the server 302 is configured to search a content information repository stored in the server 302 for a content information matching the content acquisition request and pushing the searched content information to the first terminal 301, wherein the content information repository is issued by a second terminal and stored in the server, and each piece of the content information at least comprises location information and a user identification of the second terminal.

The server 302 is configured to acquire location information of the second terminal according to the latitude and longitude coordinates of the second terminal.

The server 302 is particularly configured to acquire the matched content information according to at least one of the geographic information and the user identification, and pushing the matched content information to the first terminal 301.

When the content acquisition request comprises the geographic information, the geographic information may be inputted by a user, or the geographic information is defaulted to a current real geographic location of the first terminal 301.

The first terminal 301 is also configured to acquire the latitude and longitude coordinates of the first user's current location, and acquire the first user's current geographic information according to the latitude and longitude coordinates of the first user's current location.

In an embodiment of the present disclosure, a first terminal sends a content acquisition request to a server, wherein the content acquisition request comprises at least one of geographic information and user identification; the server searches a content information repository stored therein for content information matching the content acquisition request and pushes it to the first terminal, wherein the content information repository is issued by a second terminal and stored in the server, and each piece of the content information comprises at least location information and a user identification of the second terminal. In this way, it is possible to acquire relatively valuable content information for the user according to the user identification and/or the geographic information.

It could be understood for those skilled in the art that all of or part of the steps of the above embodiments may be implemented by hardware, or by corresponding hardware instructed by a program, which may be stored in a computer readable storage medium that can be chosen from a read only memory, a floppy disk or an compact disk, and the like.

The above description only refers to the preferable embodiments of the present disclosure, and is not intended to limit the scope of the present disclosure. Any modifications, equivalent replacements and improvements to the embodiments, as long as being within the principle of the present disclosure, should fall within the scope of the present disclosure.

## Claims

1. A method for acquiring user contents, comprising:
transmitting, by a first terminal, a content acquisition request to a server, wherein the content acquisition request comprises at least one of geographic information and a user identification; and
searching, by the server, a content information repository stored in the server for content information matching the content acquisition request and pushing the searched content information to the first terminal, wherein the content information repository is issued by a second terminal and stored in the server, and each piece of the content information comprises at least location information and a user identification of the second terminal.

2. The method according to claim 1, comprising:
acquiring, by the server, location information of the second terminal according to latitude and longitude coordinates of the second terminal.

3. The method according to claim 1, wherein the step of searching, by the server, a content information repository stored in the server for content information matching the content acquisition request and pushing the searched content information to the first terminal comprises:
acquiring, by the server, the matched content information according to the at least one of the geographic information and the user identification, and pushing the matched content information to the first terminal.

4. The method according to claim 1, comprising:
when the content acquisition request comprises the geographic information, the geographic information is inputted by a user, or the geographic information is defaulted to a real geographic location of the first terminal.

5. The method according to claim 1, wherein before the step of transmitting, by the first terminal, a content acquisition request to a server, the method further comprises:
acquiring, by the first terminal, latitude and longitude coordinates of a current location of a first user, and acquiring the geographic information of the first user according to the latitude and longitude coordinates of the current location of the first user.

6. A system for acquiring user contents, comprising a first terminal and a server;
the first terminal is configured to send a content acquisition request to the server, the content acquisition request comprises at least one of geographic information and a user identification; and
the server is configured to search a content information repository stored in the server for a content information matching the content acquisition request and pushing the searched content information to the first terminal, wherein the content information repository is issued by a second terminal and stored in the server, and each piece of the content information at least comprises location information and a user identification of the second terminal.

7. The system according to claim 6, wherein the server is configured to acquire location information of the second terminal according to latitude and longitude coordinates of the second terminal.

8. The system according to claim 6, wherein the server is configured to acquire the matched content information according to the at least one of the geographic information and the user identification, and pushing the matched content information to the first terminal.

9. The system according to claim 6, wherein when the content acquisition request comprises the geographic information, the geographic information is inputted by a user, or the geographic information is defaulted to a real geographic location of the first terminal.

10. The system according to claim 6, wherein
the first terminal is further configured to acquire latitude and longitude coordinates of a current location of a first user, and acquiring the geographic information of the first user according to the latitude and longitude coordinates of the current location of the first user.
